(19) **Europäisches Patentamt**
**European Patent Office**
**Office européen des brevets**

(11) **EP 1 908 641 A1**

(12) **EUROPEAN PATENT APPLICATION**
published in accordance with Art. 153(4) EPC

(43) Date of publication:
**09.04.2008 Bulletin 2008/15**

(51) Int Cl.:
*B60R 21/00* (2006.01)

(21) Application number: **06781643.9**

(22) Date of filing: **26.07.2006**

(86) International application number:
**PCT/JP2006/314731**

(87) International publication number:
**WO 2007/013489 (01.02.2007 Gazette 2007/05)**

(84) Designated Contracting States:
**DE FR GB**

(30) Priority: **27.07.2005 JP 2005217369**

(71) Applicants:
• **AISIN SEIKI KABUSHIKI KAISHA**
**Kariya-shi, Aichi 448-8650 (JP)**
• **TOYOTA JIDOSHA KABUSHIKI KAISHA**
**Toyota-shi,**
**Aichi-ken, 471-8571 (JP)**

(72) Inventors:
• **KAKINAMI, Toshiaki,**
**c/o Intellectual Property Department**
**Kariya-shi, Aichi 448-8650 (JP)**
• **SATONAKA, Hisashi**
**Toyota-shi, Aichi 471-8571 (JP)**

(74) Representative: **Kramer - Barske - Schmidtchen**
**European Patent Attorneys**
**Landsberger Strasse 300**
**80687 München (DE)**

(54) **PARKING ASSISTANCE DEVICE**

(57)  To provide a parking assistance device for accurately detecting obstacles in the periphery of a parking zone; for detecting a parking space in which a vehicle can be parked without coming into contact with the obstacles; and for satisfactorily assisting a driving operation. The parking assistance device detects a stationary object present in the periphery of a vehicle, and assists in parking the vehicle. The parking assistance device comprises surface shape - detection means (1) for detecting the surface shape information of the stationary object; shape recognition means (2) for recognizing the outline shape of the stationary object on the basis of the surface shape information; movement status detection means (6) for detecting the movement status of the vehicle; relative placement calculation means (3) for calculating the relative placement relationship of the vehicle and the stationary object on the basis of the surface shape information, the outline shape, and the movement status; and parking space detection means (4) for detecting a parking space in which the vehicle can be parked on the basis of the placement relationship.

Fig.1

EP 1 908 641 A1

## Description

TECHNICAL FIELD

The present invention relates to a parking assistance device for detecting obstacles present around a vehicle, and assisting in parking the vehicle being driven. The present invention particularly relates to a parking assistance device that detects other parked vehicles and other stationary objects, and that assists in parking a vehicle being driven in a location where vehicles other than the vehicle being driven are parked.

BACKGROUND ART

A variety of parking assistance devices have been proposed for assisting the driving operation when a vehicle is to be parked. A system generally known as clearance sonar is disclosed as an example of an invention in Patent Document 1, (cited below). Identifying the direction in which vehicle obstacles are present is difficult when performed with conventional onboard small-scale ultrasonic sonar units that have wide directivity, and this invention attempts to resolve this problem. According to this invention, a plurality of sonar units is disposed in the rear part of the vehicle in order to prevent contact with obstacles to the rear direction when the vehicle is reversed. This invention attempts to identify the direction in which obstacles are present on the basis of signals reflected from the sonar units.

An invention is disclosed in Patent Document 2 (cited below) in which the distance to the obstacles is detected using sonar units provided to four corner regions of a vehicle body, and an obstacle map is created with obstacle candidates superimposed on a map of the vehicle periphery. The detection range of the sonar units provided to the corners has a fan shape as seen from above, or a narrow oval shape as seen from above. The obstacles can be detected as obstacle candidates when they are located a prescribed distance from the sonar units within the sonar detection range, but complications are presented in detecting their precise location. The sonar detection is repeated at a prescribed interval, and obstacle candidates that are repeatedly detected as a result are extracted and reproduced on the obstacle map.

An invention is disclosed in Patent Document 3 (cited below) for setting a destination parking zone of a vehicle. In this invention, when white lines of the parking zone can be clearly identified, image processing is performed on the basis of the white lines; and when the white lines cannot be clearly identified, image processing is performed on the basis of obstacles. The destination parking zone of the vehicle is then set. The following method is used to detect parked vehicles as obstacles. A compound eye camera is used to observe obstacles (parked vehicles), and corresponding points in the two images are verified. Three dimensional data of the obstacles is generated by triangulation on the basis of the correlation between the corresponding points. Specifically, the coordinates of the boundary points of the obstacles are extracted using the parallel stereo method. The resulting three dimensional data is projected onto an XY coordinate plane, which is the plane of movement of the vehicle being driven. Straight lines are extracted from the projected two-dimensional data. Two mutually perpendicular straight lines are detected in correspondence with the parked vehicles, and the rectangles formed by these straight lines are detected as the obstacles.

[Patent Document 1] Japanese Laid-open Patent Application No. 2003-63335 (Paragraphs 5 through 11; FIG. 2)
[Patent Document 2] Japanese Laid-open Patent Application No. 2001-334897 (Paragraphs 25 to 29; FIGS. 3 and 4)
[Patent Document 3] Japanese Laid-open Patent Application No. 2004-34946 (Paragraphs 3 to 12, 35 to 38; FIG. 10)

DISCLOSURE OF THE INVENTION

Problems That the Invention Is Intended to Solve

In the inventions disclosed in Patent Document 1 and Patent Document 2, it is possible to know the approximate distance to an obstacle when the obstacle is present within the detection range of the sonar units. However, it is not possible to detect the location of the obstacle within the detection range. The shape of the obstacles is not specified, and limits exist in regard to the accuracy with which, e.g., the vehicle is judged to have come into contact with the obstacle.

In the invention disclosed in Patent Document 3, the location and approximate shape of the obstacles are analyzed in comparative detail. However, since the parked vehicles, which are the obstacles, are ultimately represented as rectangles, the corner portions of the parked vehicles, which are actually curved, are detected as being overly square. Therefore, an excessive margin is provided when the parking destination is set on the basis of these rectangles. This is favorable in terms of reducing the possibility of contact with the obstacles. However, this margin must be reduced when high-precision parking assistance is provided in tight spaces, where the expectations of parking assistance are higher.

The present invention was devised in view of the problems described above. It is an object of the invention to provide a parking assistance device, wherein obstacles in the periphery of a parking space are accurately detected, a parking space is detected in which it is possible to park without contacting the obstacles, and driving operation can be satisfactorily assisted.

Means for Solving the Problems

In order to achieve the objects described above, the parking assistance device according to the present invention is a device for detecting a stationary object present in the periphery of a vehicle, and assisting in parking the vehicle. The parking assistance device has the following characteristic configuration.

Specifically, the parking assistance device comprises surface shape detection means for detecting surface shape information of the stationary object; shape recognition means for recognizing the outline shape of the stationary object on the basis of the surface shape information; movement status detection means for detecting the movement status of the vehicle; relative placement calculating means for calculating a relative placement relationship of the vehicle and the stationary object on the basis of the surface shape information, the outline shape, and the movement status; and parking space detection means for detecting, on the basis of the relative placement relationship, a parking space in which the vehicle can park.

According to this characteristic configuration, the surface shape detection means detects the surface shape information of the objects, and the shape recognition means recognizes the outline shape of the stationary object, which corresponds to an obstacle, on the basis of the surface shape information.

The surface shape information is information indicating the shape of the surface of the stationary object as seen from the vehicle (referred to as "vehicle being driven" below as appropriate) on which the parking assistance device of the present invention is mounted. Examples of such stationary objects include parked vehicles, wall surfaces in narrow roads; and power poles or signal lights adjacent to the wall surfaces on the narrow road. A reflective sensor that uses radio waves or ultrasonic waves; an image sensor for obtaining image data by using visible light or infrared light; or a camera (either video or still image) can be used to detect the surface shape information.

The shape recognition means recognizes the outline shape of the stationary object on the basis of the resulting surface shape information. When the surface shape information is to be obtained, information is acquired regarding the relationship between the surface shape information and the distance between the vehicle being driven and the stationary object. The outline shape of the stationary object is recognized from the surface shape information, and it is therefore possible to ascertain the distance between the vehicle being driven and the outline shape of the stationary object.

When the surface shape information is acquired while the vehicle being driven is moving, the movement status of the vehicle being driven is detected by the movement status detection means. Therefore, the relative placement calculation means can calculate the relative placement relationship of the vehicle being driven and the stationary object according to the surface shape information, the outline shape, and the movement status.

Since the external shape of the vehicle being driven is already known, the parking space detection means can detect whether a space is present in the vicinity of the stationary object in which the vehicle being driven can park. When a plurality of stationary objects is present, the parking space detection means can detect whether or not a space in which a vehicle being driven can park is present in a space between two of the stationary objects.

According to the characteristic configuration described above, the outline shape is recognized by the shape recognition means. Therefore, obstacles in the periphery of the parking space, i.e., stationary objects, can be accurately detected. The parking space detection means can detect a parking space in which the vehicle can be parked without coming into contact with a stationary object. As a result, it is possible to provide a parking assistance device for satisfactorily assisting a driver in carrying out a driving operation.

In the parking assistance device according to the present invention, the surface shape detection means detects the surface shape information in conjunction with the movement of the vehicle. The shape recognition means recognizes the outline shape on the basis of the surface shape information and the movement state.

If the surface shape detection means is one that detects the surface shape information as the vehicle being driven is in motion, the surface shape detection means does not need a function for scanning a wide range. Specifically, a single beam sensor, a point sensor, or another distance sensor that designates substantially one point as the object to be detected can be used to detect the surface shape. The parking assistance device according to the present invention is provided with movement status detection means, and can therefore accurately ascertain the distribution of the surface shape information of a stationary object on the basis of the surface shape information and the movement status. As a result, the shape recognition means can satisfactorily recognize the outline shape.

The parking assistance device according to the present invention comprises parking reference setting means as described below for setting a parking reference for ascribing a rectangular shape to the parking space, and for parking the vehicle (vehicle being driven) within the range of the parking space.

The parking reference setting means sets, as the parking reference, a first reference line, which is parallel to an edge on an entrance side where the vehicle (vehicle being driven) begins to enter the parking space, and which is provided to the entrance side of the parking space; and a second reference line, which is perpendicular to the first reference line, and which is provided to a prescribed position.

The first reference line and the second reference line are set so that parking is completed when a front or rear end part along the longitudinal direction of the vehicle (vehicle being driven) is aligned with the first reference line; and the vehicle axis, which is center line along the longitudinal direction of the vehicle, is aligned with the second reference line.

Two methods are generally used when parking a vehicle. One method is garage parking in which a vehicle is parked at approximately a 90° angle with respect to the direction of travel. In this parking method, a stationary object is present to a side of the vehicle, and a parked state is achieved with a side surface of the vehicle facing the stationary object. If the stationary object is a parked vehicle, a parked state is achieved with the side surfaces of these vehicles are aligned with each other. The rear end part or front end part in the longitudinal direction of the vehicle preferably remains within the parking space in consideration of other vehicles or pedestrians.

A first reference line is provided to the entrance side, and is parallel to one side of the entrance side at which the vehicle begins to enter the parking space, as described in the configuration above. Parking concludes in a state wherein the front end part or rear end part of the vehicle being driven is aligned with the first reference line. When the vehicle being driven advances into the parking space, parking concludes in a state in which the rear end part is aligned with the first reference line. When the vehicle enters in reverse, parking concludes in a state in which the front part is aligned with the first reference line.

A parking reference can accordingly be set so that the vehicle being driven can be parked without protruding to the rear or the front, relative to the detected parking space at a minimum. Parking concludes in a state in which a second reference line, which is provided to a prescribed position perpendicularly with respect to the first reference line, is aligned with a vehicle axis, which is a center line in the longitudinal direction of the vehicle being driven. Therefore, a reference for parking the vehicle being driven in the detected parking space can be clearly indicated by using the first reference line and the second reference line. Favorable assistance can be provided in the vehicle parking operation.

In the parking assistance device, the second reference line is set so as to pass through the center of the parking space.

When the second reference line is defined so as to pass through the center of the detected parking space, an equal gap is maintained to the left and right of the vehicle being driven, and the vehicle can be parked in the center of the detected parking space.

In the parking assistance device according to the present invention, extra space between the stationary object and the vehicle (vehicle being driven), which is necessary when the vehicle is moved in and out of the parking space, is provided within the parking space. The second reference line is set with respect to the parking space without the extra space being included.

For example, when the vehicle being driven is to be taken out from the state of having been parked in a garage, the vehicle being driven will advance in the left or right direction. When the vehicle advances with the steering wheel turned in the left direction or the right direction, the trajectory of the rear wheels will pass inside the direction in which the steering wheel is turned, with respect to the trajectory of the front wheels. Specifically, a difference in trajectories, referred to as a so-called inside wheel difference, exists between the front wheels and the rear wheels. When the direction in which the vehicle is to be taken out is determined before parking, extra space is preferably provided between the stationary object and the vehicle being driven, in view of the inside wheel difference. If the extra space is removed from the detected parking space, and the second reference line is provided to the remaining parking space, the parking reference of the vehicle being driven can be clearly shown with the inside wheel difference also have been taken into account. Similarly, the parking reference can be clearly shown in cases where it is desirable to provide extra space on the side from which passengers will exit when the vehicle is being taken into a garage.

As described above, two methods are generally used when parking a vehicle. One method is garage parking, as described above. The other method is so-called "parallel parking" in which a vehicle is parked parallel to the direction in which the vehicle is traveling (e.g., on a road). In parallel parking, stationary objects are present in front of and behind the vehicle being driven, and the front and rear parts of the vehicle being driven are aligned with the stationary objects to result in a parked state. If the stationary objects are parked vehicles, the front and rear portions of the vehicle being driven are aligned with the corresponding front and rear portions of the parked vehicles to result in a parked state. The transverse direction of the vehicle preferably remains within the parking space in consideration of other vehicles and pedestrians.

In this case, the first reference line and the second reference line are preferably set so that parking is completed in a state in which the first reference line is aligned with the left or right end part in the transverse direction of the vehicle (vehicle being driven); and the second reference line is aligned with the front or rear end part in the longitudinal direction of the vehicle (vehicle being driven).

As described above, the parking assistance device of the present invention preferably has parking reference setting means for setting the parking space to be rectangular in shape, and setting a parking reference for parking the vehicle (vehicle being driven) within the range of the parking space.

The parking reference setting means sets a first reference line that is parallel to an edge on an entrance side where the vehicle (vehicle being driven) begins to enter the parking space, and that is provided to the entrance side of the parking space. The parking reference setting means sets a second reference line that is perpendicular to the first reference line, and is provided to a prescribed position.

Parking concludes in a state in which the first reference line is aligned with the edge of the vehicle being driven. A parking reference can thereby be provided in which the vehicle being driven can be parked without protruding in the transverse direction from the detected parking space at a minimum. Parking concludes in a state in which the second reference line, which is provided to a prescribed position perpendicularly with respect to the first reference line, is aligned with the front end part or rear end part, which are the end parts to the front or rear along the longitudinal direction of the vehicle being driven. A reference for parking the vehicle being driven can be clearly shown by the first reference line and the second reference line in the detected parking space. Favorable assistance can be provided in the vehicle parking operation.

In the parking assistance device according to the present invention, extra space between the stationary object and the vehicle, which is necessary when the vehicle is moved in and out of the parking space, is provided within the parking space. The second reference line is determined with respect to the parking space with the extra space having been removed.

In the case of parallel parking, it is difficult to take the vehicle out when a certain amount of space has not been maintained between the vehicle being driven and the stationary object in front of the vehicle being driven. The vehicle being driven may be parked in the center of the parking space along the longitudinal direction. However, an operation will be necessary when the vehicle is taken out, wherein the vehicle is again reversed to provide a gap to the front. In view of this, extra space that corresponds to this gap should be provided in advance to the front of the vehicle being driven when the vehicle is parked. Similarly, when the vehicle enters the parking space, a parking reference can be clearly shown in cases where it is desirable to provide extra space to the side from which passengers will exit the vehicle.

In the parking assistance device according to the present invention, the extra space can be changed according to a desired width to be maintained on the driver side or the passenger side during parking.

According to this characteristic configuration, the extra space can be appropriately changed according to the conditions at the time of parking. For example, when the driver is unaccompanied, having more space on the driver side is more convenient when they need to enter or exit the vehicle. In this case, an increased amount of extra space on the driver side can be ensured. It shall be apparent that an increased amount of extra space can also be ensured on the passenger side.

For example, in cases where it is desirable to ensure sufficient space for children or elderly passengers when they need to enter and exit the vehicle, the amount of extra space on the side on which it is desirable to ensure the space can be varied according to the amount of space desired to be ensured.

In the parking assistance device according to the present invention, the shape recognition means has the following parts.

Specifically, the shape recognition means has a sample extraction part for extracting an arbitrary sample from among a sample group constituting the surface shape information; a shape model setting part for defining a shape model on the basis of the extracted sample; an agreement calculation part for calculating the degree of agreement between the shape model with respect to the sample group; and a determining part for determining whether the shape model matches the sample group on the basis of the calculation results.

The shape recognition means recognizes an outline shape from the sample group obtained from the surface shape detection means. Here, the sample group indicates a collection of individual units of data constituting the surface shape information. As described above, when a reflection-type sensor is used, the individual data is information corresponding to locations obtained by receiving signals reflected by the locations of the obstacles. In the case of image data, it is possible to use data that is obtained using a variety of image processing methods such as edge extraction and three-dimensional conversion. The data expressing the surface shape of the objects is thus handled as a sample, regardless of the type of shape recognition means, and the collection of samples is referred to as a sample group.

The sample extraction part arbitrarily (randomly) extracts several samples from this sample group. The shape model setting part determines the shape model on the basis of the extracted samples. When the shape model is set, the shape model may be geometrically calculated from the extracted samples; or may be determined using a method in which a plurality of templates is prepared in advance, and the shape model is applied to the most suitable template. The agreement calculation part calculates the degree of agreement, which is the extent to which the entire sample group matches the shape model. The determining part determines whether the resulting shape model fits the sample group, based on the calculation results.

In cases where samples that are affected by noise are included in the arbitrarily extracted samples, the degree of agreement between the determined shape model and the sample group decreases. The shape model can therefore be determined as not fitting the sample group. The degree of agreement increases in cases where the shape model is determined without the inclusion of samples affected by noise. The shape model can therefore be determined as fitting the sample group. The outline shape of the target stationary object can thus be recognized using a minimal amount of calculation and in the absence of samples affected by noise.

The number of arbitrarily extracted samples is far less than the number samples that constitute the sample group. Therefore, the shape recognition means determines the shape model from a number of samples that is far less than that of the sample group. The amount of calculation necessary to extract the samples and determine the shape model is therefore also reduced. Therefore, the calculation time is short, and the scale of the device is not increased. The degree of agreement between the shape model and the sample group can be geometrically calculated using spatial coordinates of the samples. Therefore, the agreement calculation can be carried out using a minimal amount of calculation. Since the amount of calculation is minimal, the total amount of calculation can be minimized, even if different shape models are repeatedly determined, and the degree of agreement is calculated. As a result, the outline shape can be recognized with a high degree of precision.

In the parking assistance device according to the present invention, the stationary object is a parked vehicle.

Locations where the vehicle being driven may conceivably be parked include, e.g., a shoulder of a road or a parking lot. The stationary object that is highly likely to be present, or that creates stress for the driver on road shoulders or in parking lots may be another parked vehicle (parked vehicle).

According to this characteristic configuration, the outline shape is recognized by the shape recognition means, and the parked vehicle can accordingly be accurately detected as an obstacle (stationary object) in the periphery of the parking zone. The parking space detection means can detect a parking space in which the vehicle being driven can be parked without coming into contact with the parked vehicles. As a result, it is possible to provide a parking assistance device that can satisfactorily assist the driver with the driving operation.

In the parking assistance device according to the present invention, the stationary object is a parked vehicle. The surface shape detection means detects the bumpers of the parked vehicles or the side surfaces of the parked vehicles as the surface shape information.

Two methods are generally used when the vehicle being driven is to be parked in locations where other vehicles (parked vehicles) are present (road shoulders or parking lots).

One method is garage parking in which a vehicle is parked at approximately a 90° angle with respect to the direction of travel. In this parking method, parked vehicles are present on the sides of the vehicle being driven, and a parking state is achieved with the side surfaces of the vehicles facing each other.

The other method is so-called parallel parking in which a vehicle is parked parallel to the direction in which the vehicle is traveling (e.g., on a road). In this parking method, parked vehicles are parked in front of and behind the vehicle being driven, and the front and rear parts of the vehicles are aligned to result in a parked state.

In garage parking, the rear end part or front end part in the longitudinal direction of the vehicle preferably remains within the parking space in consideration of other vehicles or pedestrians. Setting the bumpers of the parked vehicles as the reference allows the parking position in the parking space of the vehicle being driven to be clearly shown. In this characteristic configuration, parking assistance can be satisfactorily carried out if the bumpers of the parked vehicles are detected as the surface shape information.

In parallel parking, the transverse direction of the vehicle preferably remains within the parking space in consideration of other vehicles and pedestrians. Setting the side surfaces of the parked vehicles as a reference allows the parking position in the parking space of the vehicle being driven to be clearly shown. In this characteristic configuration, parking assistance can be parking assistance can be satisfactorily carried out if the side surfaces of the parked vehicles are detected as the surface shape information.

BEST MODE FOR CARRYING OUT THE INVENTION

[System Configuration]

A working example of a parking assistance device according to the present invention will be described below according to the drawings, wherein parked vehicles (stationary objects) present in the periphery of a vehicle are assumed to be obstacles. However, as is clear from the principle of the present invention described below, the obstacles are not limited to parked vehicles, but may also be wall surfaces in narrow roads, power poles adjacent to wall surfaces on narrow roads, and a variety of other stationary objects.

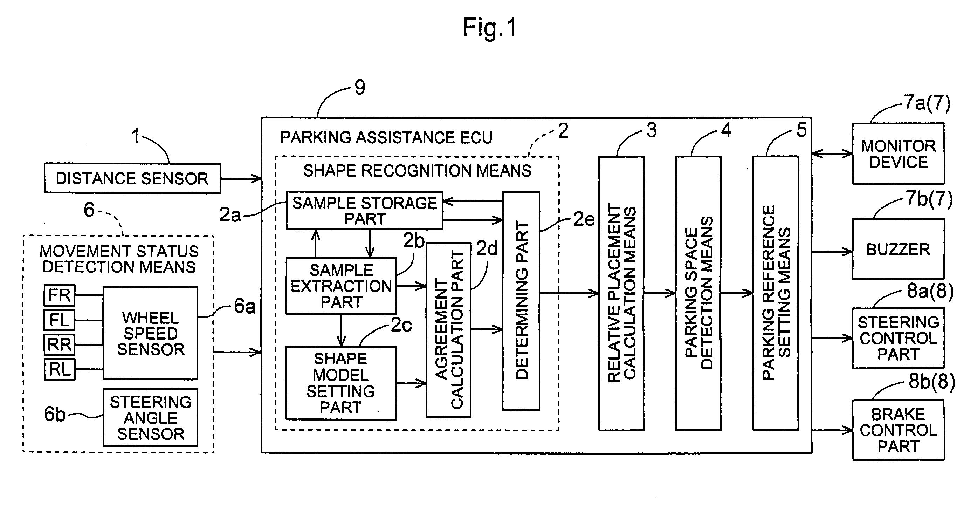

FIG. 1 is a block diagram schematically showing a configuration of a parking assistance device according to the present invention. A distance sensor 1 corresponds to a surface shape detection means of the present invention. The detection results obtained using the distance sensor 1 are inputted to a parking assistance ECU 9, and used in calculations for parking assistance. Movement status detection means 6 detects the movement status of a vehicle in which the parking assistance device of the present invention is mounted. The detection results obtained using the movement status detection means are also inputted to the parking assistance ECU 9, and used in calculations for parking assistance. The movement status detection means 6 has, e.g., a wheel speed sensor 6a and a steering angle sensor 6b. The wheel speed sensor 6a is configured from, e.g., rotation sensors. Rotation sensors, which are mounted in four locations corresponding to the left and right front wheels (FL, FR) and the left and right rear wheels (RL, RR), detect the rotational speed and rotational direction of the wheels. The steering angle sensor 6b detects the steering angle of a vehicle 10 from the steering rotation angle. The steering angle of the vehicle 10 may also be calculated from the difference in the rotational speed of the rotational sensors 6a.

The parking assistance ECU (Electronic Control Unit) 9 is the core of the parking assistance device of the present invention. For example, the parking assistance ECU is configured from a microcomputer, a DSP (Digital Signal Processor), or another electronic circuit. The parking assistance ECU 9 has shape recognition means 2, relative placement calculation means 3, parking space detection means 4, parking reference setting means 5, and other means that perform constituent functions the parking assistance device of the present invention. The shape recognition means 2 has a sample storage part 2a, a sample extraction part 2b, a shape model setting part 2c, an agreement calculation part 2d, a determining part 2e, and other processing parts that perform functions for satisfactorily recognizing the surface shape of parked vehicles. The means and processing parts described above do not necessarily refer to physically different electronic circuits; they may indicate parts that perform as functions. For example, the means and parts include different functions are obtained by carrying out different programs using the same CPU.

As shown in FIG. 1, the parking assistance device has a monitor device 7a, a buzzer (speaker) 7b, or the like as notification means 7 for notifying a driver regarding calculated assistance information. The monitor device 7a shows assistance information superimposed on an image captured by, e.g., an onboard camera (not shown), and notifies the driver. The screen of the monitor device 7a is a touch panel. A variety of switches are displayed on the screen via the parking assistance ECU 9 or other GUI (graphic user interface) control means provided to the ECU. The driver can input commands to the parking assistance ECU 9 by operating these switches. For example, the driver can use the touch panel to start the parking assistance mode or to input the type of parking mode or other attributes.

When parking assistance is to be performed, so-called preprocessing is carried out. Specifically, surface shape information of parked vehicles present in the periphery of the vehicle is detected using the distance sensor 1 (surface shape detection step), and the outline shape of the parked vehicles is recognized mainly using the shape recognition means 2 (shape recognition step). The preprocessing results are received, and a relative placement calculation step, a parking space detection step, and a parking reference setting step are carried out using the relative placement calculation means 3, parking space detection means 4, parking reference setting means 5, and the like. Satisfactory parking assistance is thereby achieved. Embodiments corresponding to these steps will be described below in order to facilitate understanding.

[Surface shape detection step]

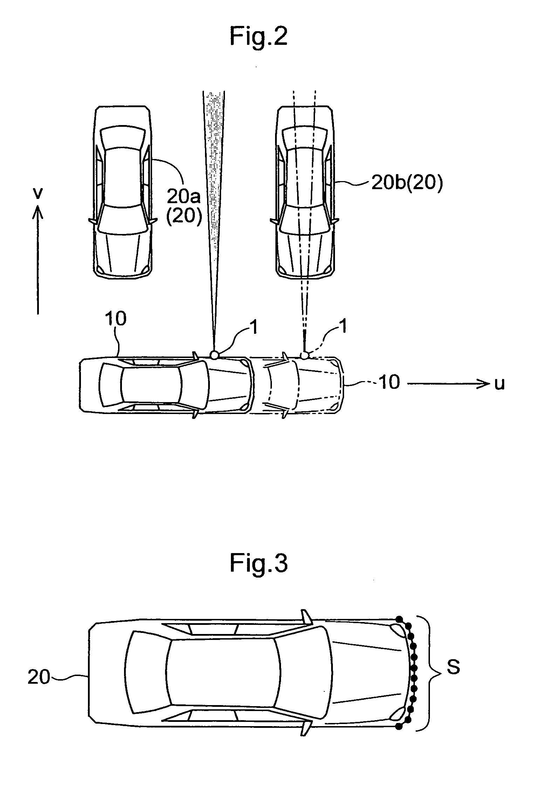

The surface shape detection step will be described first. The distance sensor 1 used as the surface shape detection means is, for example, a point sensor, i.e., a sonar unit using single beam sensors or ultrasonic waves. As shown in FIG. 2, the vehicle 10 on which the parking assistance device of the present invention is mounted uses the distance sensor 1 provided facing the side of the vehicle to measure the distance between the vehicle being driven and other parked vehicles 20 (referred to as "parked vehicles" below). Specifically, when the vehicle 10 passes next to the parked vehicles 20 in the u direction shown in the drawings, the distance to the parked vehicles 20 is measured by the distance sensor 1. In FIG. 2, the distance sensor 1 is only provided to the left side of the vehicle 10 for convenience, but the distance sensor may be provided to both sides, as shall be apparent.

The distance sensor 1 measures the distance between the parked vehicles 20 according to the movement of the vehicle 10. The resulting surface shape information of the parked vehicles 20 is discrete data corresponding to the movement distance of the vehicle 10, as shown in FIG. 3. This data will be described in detail below, and a collection of the resulting discrete data is referred to as a sample group S. "According to the movement distance" of the vehicle 10 also means "according to a prescribed time interval." For example, if the vehicle 10 moves at a constant speed, and measurements are taken according to a prescribed time interval, then measurements will be taken according to the movement distance. When the speed of the vehicle 10 fluctuates, the information regarding the speed of the vehicle 10 can be acquired from the movement status detection means 6. The movement speed, movement distance, and movement time of the vehicle 10 can be determined linearly. Similarly, in cases where the steering wheel of the vehicle 10 is turned, error resulting from the steering angle can be corrected if the steering angle detected by the steering angle sensor 6b has been acquired. Any method may thus be used to acquire the surface shape information as long as the surface shape information is obtained in an overall uniform manner as a result.

The distance sensor 1 can be provided with a timer for measuring the movement time; an encoder for measuring the movement distance; a rotation sensor for measuring the movement speed; or another sensor, provided separately from the movement status detection means 6. The surface shape information may also be detected by scanning in the horizontal direction at a fixed angle, and not by acquiring the surface shape information in conjunction with the movement of the vehicle 10.

The detected surface shape information of the parked vehicles 20 is not limited to the front surfaces of the parked vehicles, as in the example shown in FIGS. 2 and 3, and may also correspond to the rear surfaces as shall be apparent. The side surfaces of the vehicles may also be detected, as in the example shown in FIGS. 4 and 5. In other words, the necessary locations of the parked vehicles 20 are detected according to the difference in the parking mode of the vehicle 10. The difference in the parking mode is, e.g., whether the parking mode is garage parking, in which the vehicle 10 is parked at approximately a 90° angle with respect to the direction of travel; or parallel parking, in which the vehicle is parked parallel to the direction of travel.

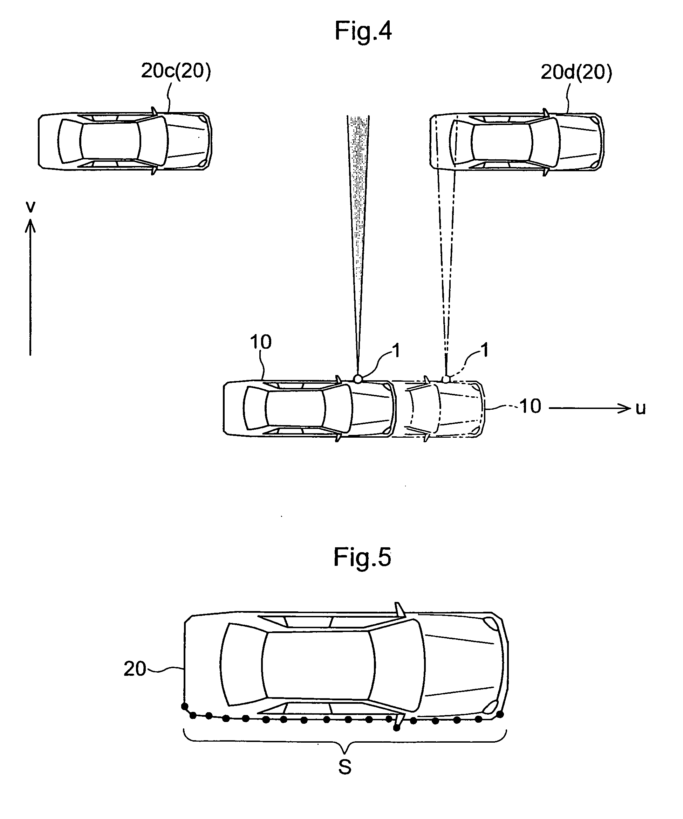

As shown in FIG. 5, the end part of the door mirror may be detected, rather than the side surface of the vehicle 20. However, the end part of the door mirror is adequately small relative to the entire length of the vehicle 20. Therefore, even if the end part of the door mirror is detected, substantially no adverse effect is encountered in relation to acquiring the surface shape information of the side surface of the vehicle 20. It shall be apparent that the end part of the door mirror will not be detected in cases where the surface shape information of the side surface of the vehicle 20 is detected in a position lower than the door mirror.

In the example shown in FIG. 3, the surface shape information S is measurement data that is discretely obtained in a form along the exterior shape of the bumper part of a parked vehicle 20. As described above, one group of the discretely obtained data constitutes the sample group S. The sample group S is a data set obtained from recognizing the outline shape. The data of the individual points that constitute the data set are referred to as the samples s.

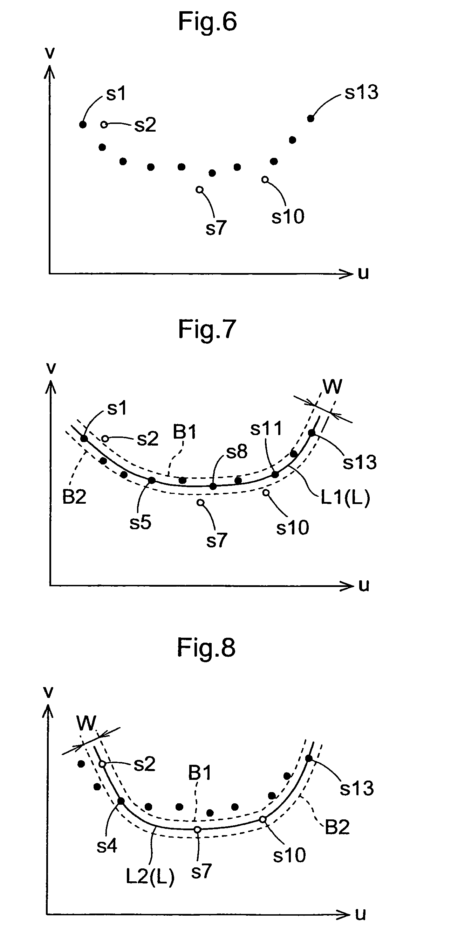

The surface shape information measured by the distance sensor 1 is inputted to the shape recognition means 2 (see FIG. 1). The inputted surface shape information (sample group S) is detected on a two-dimensional plane having the u direction and v direction shown in FIG. 2 (and FIG. 4) as axes. As shown in FIG. 6, the information is mapped on the uv two-dimensional Cartesian coordinate system, and stored in the sample storage part 2a. Not all of the samples s are shown in the drawings, so as to facilitate description. Among the samples shown in FIG. 6, samples s indicated by black dots are referred to as inliers, and samples s indicated by outline dots are referred to as outliers. In the drawings, samples s1, s13, and the like are inliers, and samples s2, s7, and s10 are outliers. As shall be described hereunder in detail, the inliers are samples that constitute the outline shape of the parked vehicle 20. The outliers are samples affected by so-called noise and have been excluded from the outline shape of the parked vehicle 20.

The sample storage part 2a is composed of a memory. The present embodiment shows a mode in which the sample storage part 2a is incorporated within the parking assistance ECU 9, which is composed of a microcomputer. It shall be apparent that a so-called external mode can be used, with the memory being separate from the microcomputer. A resistor, a hard disk, or another recording medium may be used, regardless of whether the memory is disposed onboard or peripherally. In any case, the surface shape information stored in the sample storage part 2a is used, and the surface shape of the parked vehicle 20 is recognized as described below.

[Shape recognition step (1)]

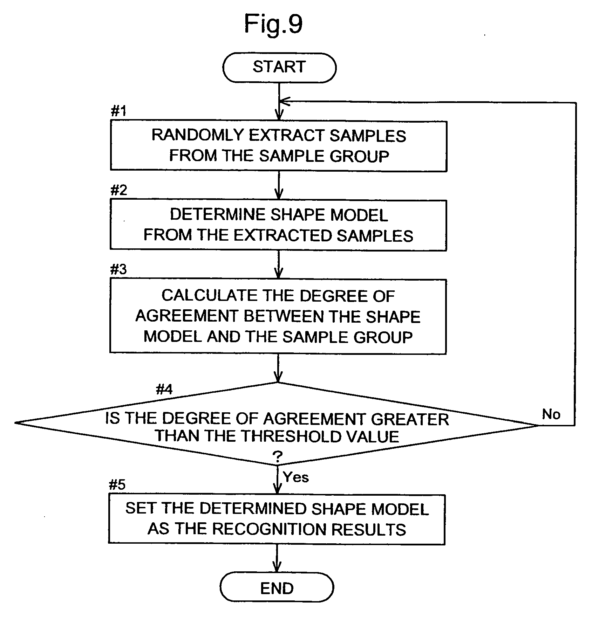

The following is a description of the procedure for recognizing the outline shape of a parked vehicle 20 from the resulting sample group S (shape recognition step) using the flowchart shown in FIG. 9 in addition to the block diagram in FIG. 1.

The sample extraction part 2b extracts several arbitrary samples si (where i is the sample number) from the sample group S (samples s1 to s13) (sample extraction step; #1 in FIG. 9). The samples s are extracted at random. Random numbers are preferably used. For example, a random number generator (not shown) is provided to the parking assistance ECU 9, and random numbers are generated. The sample numbers may also be determined by a program for generating random numbers, which is executed by the parking assistance ECU 9. Samples si are extracted, with the sample numbers being the random numbers that have been generated.

The minimum number of extracted samples differs according the target shape that is to be recognized. For example, when a straight line is to be recognized, the minimum number of samples is two points. When a two-dimensional curved line is to be recognized, the minimum number of samples is five points. In the present embodiment, the shape of the bumper of the parked vehicle 20 is similar to a two-dimensional curved line, as shown in FIG. 3, and five points are therefore extracted. The collection of individual data and samples s that have been extracted in this manner is a conceptual subset corresponding to a data set.

Next, the shape model setting part 2c determines the shape model on the basis of the subset (collection of randomly selected samples s) (shape model setting step; #2 in FIG. 9).

FIG. 7 is a descriptive diagram for calculating the degree of agreement between the sample group S and the shape model L (first shape model L1) determined using the samples si arbitrarily extracted from the sample group S shown in the point diagram of FIG. 6. The first shape model L1 is determined on the basis of five samples s, including samples s1, s5, s8, s11, and s13. The shape model L can be readily determined by a linear calculation, which entails a lighter calculation load. The shape model is alternatively determined by preparing several types of template shapes in advance, and selecting the optimal shape from among the template shapes.

As shown in FIG. 7, dotted lines B1 and B2 are determined by connecting, along the shape model L, points that are separated at a prescribed distance in both directions perpendicular to the tangent lines of the shape model L. The portion between the dotted lines B1 and B2 is designated as the effective range W. The agreement calculation part 2d calculates the degree of agreement between the determined shape model L and the sample group S. Specifically, the degree of agreement is calculated by determining how many of the samples si that constitute the sample group S are included within the effective range W that has been determined as described above (agreement calculation step; #3 in FIG. 9).

All of the samples s except the outlier samples s2, s7, and s10 are included within the effective range W that corresponds to the first curved line model L1 shown in FIG. 7. Therefore, the degree of agreement between the first shape model L1 and the sample group S is 77% (10/13). Specifically, an agreement (consensus) could be obtained at a high rate of corroboration (77%) between the first shape model L1 and the samples s that constitute the sample group S.

The determining part 2e then determines whether the degree of agreement has exceeded a prescribed threshold value (determining step; #4 in FIG. 9). Specifically, a decision is made as to whether or not the shape model fits the sample group S. In cases where the shape model fits, the shape model determined from the extracted subset (first shape model L1) is identified as the recognition result (identifying step; #5 in FIG. 9). Specifically, the first shape model L1 is taken to be the outline shape. For example, in a case where the threshold value is set at 75%, the first shape model L1 is assumed to be the outline shape. If the threshold value is not exceeded, the process returns to the process #1 in the flowchart of FIG. 9, different samples s are again extracted, a new subset is obtained, and the same process is carried out. In cases where the threshold value has not been exceeded even when the processes #1 to #4 are repeated a plurality of times, it is determined that no parked vehicles 20 are present. The number of repetitions may be specified in advance.

In the present embodiment, the total number of samples s that constitute the sample group S is set to 13 to facilitate understanding. The threshold value (75%) is also set in order to facilitate describing the present embodiment. Therefore, neither the number of samples nor the threshold value of the degree of agreement limit the present invention. For example, if the number of samples is increased, the number of inliers will be relatively increased with respect to the number of outliers, and a threshold value that is higher than that of the example described above may be set. In #4 in FIG. 9, a determining equation is shown with a greater-than sign, but a greater-than-or-equal-to sign may also be used, as shall be apparent. In this respect, either is sufficient as long as it is possible to determine whether the shape model fits the sample group S.

In the shape model L shown in FIG. 8 (second shape model L2), samples s2, s4, s7, s10, and s13 are extracted as the subset. As described above, the samples s2, s7, and s10 are so-called samples that are affected by noise and are separated from the outline shape of the parked vehicle 20. These samples are therefore outliers when viewed from the outline shape of the parked vehicle 20. Therefore, as shown in FIG. 8, there are multiple samples s that are separated from the effective range W of the second shape model L2. Specifically, since the second shape model L2 is determined on the basis of the subset including the outlier samples s2, s7, and s10, the compatibility between the second shape model and the sample group S is reduced. When the degree of agreement is calculated using the same method as the first shape model L1, the degree of agreement is 38% (5/13). Specifically, it can be said that an agreement (consensus) could not be reached at a high corroboration between the second shape model L2 and the samples s that constitute the sample group S.

In the case that two shape models L1 and L2 are extracted, the outline shape, which is the recognition result, is the first shape model L1. The samples s2, s7, s10, which are affected by noise, are not used when the first shape model L1 is determined. The samples that are affected by noise are handled as outliers and are removed. Specifically, data that is not to be detected (outliers) will be removed if included, and the shape of the object can be stably recognized using a minimal amount of calculation.

[Comparison with conventional method for recognizing shapes]

A variety of methods have been proposed in the prior art for calculating the outline shape from the samples S (sample group S), without using the method described above. One such method is the least square method. In the least square method, all of the samples s in the data set are used, and the shape is calculated with each sample s given an equal weighting. As a result, the calculation is affected by the outliers described above (e.g., sample s2), and an outline shape that differs from the original outline shape is recognized. The degree of agreement with the entire data set can be reconfirmed after the outline shape has been recognized. However, the calculation load of the least square method is relatively high, and will be further increased when shape recognition using the least square method is repeated as a result of reconfirmation.

Another method is a method in which Hough conversion is used, which is particularly preferred for recognizing straight lines. As is widely known, Hough conversion utilizes a property in which straight lines that are present on a Cartesian coordinate system (e.g., the uv plane) intersect at one point on a polar coordinate system (ρ-θ space). The following is the equation used in the conversion.

$$\rho = u \cdot \cos\theta + v \cdot \sin\theta$$

According to the above equation, the amount of calculation increases proportionally when an attempt is made to obtain a low resolution, or to expand the range of ρ and θ in the polar coordinate space to facilitate understanding. In other words, large capacity memory is required as primary storage means, and the number of calculations also increases.

The method of the present invention is a method for "calculating the degree of agreement between the sample group S and the shape model L, determined on the basis of the samples s arbitrarily extracted from the sample group S that constitutes surface shape information." The method of the present invention involves less calculation and requires less memory capacity than the conventional calculations.

In the above description, the degree of agreement between the shape model L and the sample group S is examined, and the shape model L is determined to be the recognition result if the degree of agreement exceeds a prescribed threshold value. Specifically, the shape model L that exceeds the threshold value first is directly set as the recognition result. This mode is not provided by way of limitation. A plurality of shape models L may be evaluated merely when the threshold value is exceeded, without the shape model L being immediately set as the recognition result. The specific procedure is described below.

[Shape recognition step (2)]

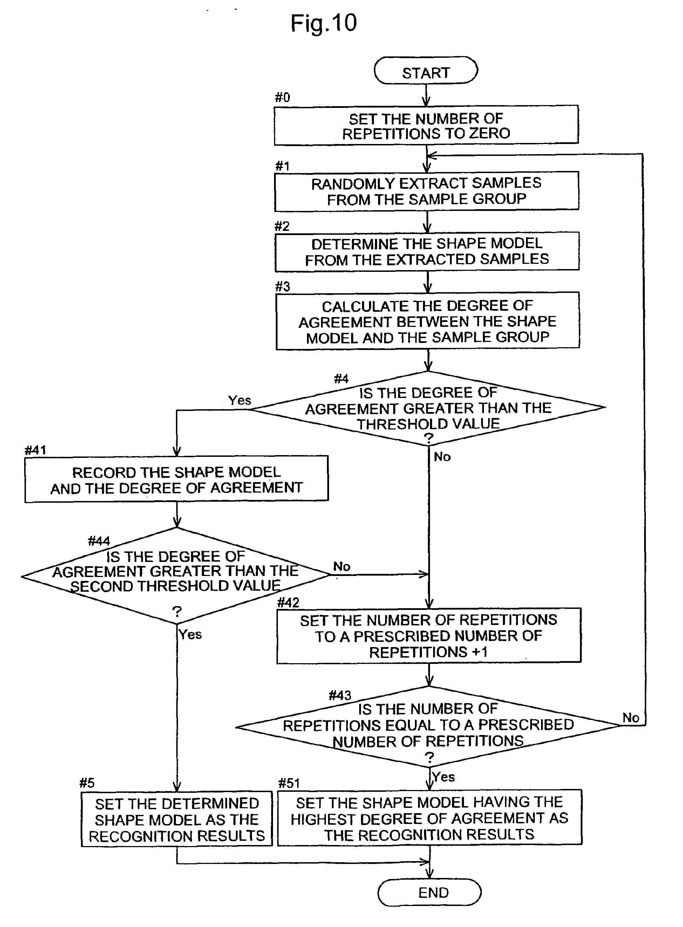

FIG. 10 is a flowchart that provides a description of another example of a method for recognizing the outline shape from the sample group shown in the point diagram of FIG. 6. In this method, a subset is extracted multiple times, the shape models L are determined, and the shape model L that has the highest degree of agreement is set as the recognition result. The method is described below on the basis of FIG. 10. The processes #1 to #4 are the same as in the flowchart shown in FIG. 9, and a description of thereof is therefore omitted.

Since the subset is repeatedly extracted multiple times in the method shown in FIG. 10, the number of repetitions is temporarily recorded. The number of repetitions that has been stored is first cleared at the beginning of the shape recognition step (initialization step; #0 in FIG. 10). In the sample extraction step (#1), subsequently, samples s are randomly extracted from the sample group S and a subset is created in the same manner as the method shown in FIG. 9. In the shape model setting step (#2), a shape model L is then determined on the basis of the subset. The degree of agreement between the shape model L and the sample group S is calculated in the agreement calculation step (#3). In the determining step (#4), a decision is made as to whether the degree of agreement exceeds a prescribed threshold value.

As a result of the determination, in cases where the threshold value is exceeded, the degree of agreement between the previously determined shape model L and this shape model L is stored in a temporary storage unit (not shown) (storage step, #41). A decision is then made as to whether this degree of agreement exceeds a second threshold value that is set at a higher value (second determining step, #44). The second threshold value is a high degree of agreement that is substantially perfect. When the threshold value indicates an extremely high degree of agreement, there is no need to repeatedly extract the subset, for which reason this step is provided. When the second threshold value is determined to have been exceeded-in the second determining step (#44), the shape model L determined in the shape model determining step #2 (i.e., the shape model L stored in the storage step (#41)) is set as the recognition result (identifying step, #5).

If the threshold value (second threshold value) is determined not to have been exceeded in the determining step (#4) or the second determining step (#44), the process proceeds to the counting step (#42). Specifically, a single shape model L is evaluated, and the number of repetitions is therefore incremented.

A decision is then made as to whether the number of repetitions has reached (or exceeded) a prescribed number (disengagement determination step, #43). If a prescribed number has not been reached, the process will return to the sample extraction step (#1) and will be executed again up to the determining step (#4), whereupon a new shape model L will be evaluated. If a prescribed number has been reached, the shape model L that has the highest degree of agreement among the stored shape models L is selected, and this shape model is set as the outline shape for use as the recognition result (identifying step, #51). If no instance of the degree of agreement exceeding the threshold value occurs in the determining step (#4), it is determined that no corresponding shape models exist in the identifying step (#51). Another possibility is to proceed to the counting step (#42) after the storage step (#41), without a second threshold value being set and without the second determining step (#44) being performed. Specifically, the shape models L of a prescribed number of previous repetitions are always evaluated, and the shape model L having the highest degree of agreement may be set as the recognition result in the identifying step (#51).

The method shown in FIG. 9 and the method shown in FIG. 10 both identify the shape model L determined on the basis of the subset as the outline shape. Shape models L determined on the basis of a small number of samples are generally not regarded as being able to reproduce an accurate outline shape. In the present invention, however, the degree of agreement between the shape model L and all of the samples of the sample group S are ultimately evaluated. Therefore, the shape model L is regarded as being able to reproduce (recognize) the outline shape in a substantially accurate manner. The fact that the outline shape can be reproduced by the shape model L determined from the small number of samples that constitute the subset thus greatly contributes to reducing the amount of calculation.

As described above, the fact that the shape model L is directly identified to be the outline shape as the recognition result greatly contributes to reducing the amount of calculation. However, the present invention is not limited to this mode. The outline shape may be recalculated, e.g., in cases where the calculating means of the parking assistance ECU 9 or the like has extra performance.

If the shape model L for which the degree of agreement exceeds the threshold value is set as a reference, each of the samples s that constitute the sample group S will be defined as inliers or outliers. The inliers and outliers are identified in the identifying step. A shape is recalculated using, e.g., the least square method on all of the samples s identified as inliers (recalculation step). As described above, with the least square method, the results are influenced by samples s that have been affected by noise, and the shape may not be able to be accurately reproduced. In the recalculation step, however, samples s that have been affected by noise are removed as outliers, and an accurate shape can therefore be reproduced.

[Relative placement calculation step]

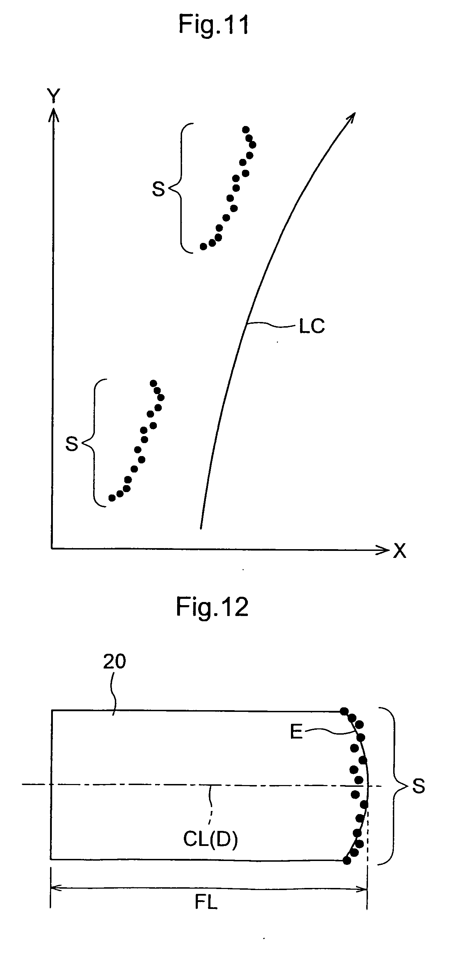

FIG. 11 is a descriptive diagram showing an example in which surface shape information (sample group S) of the parked vehicles 20 detected in FIG. 2 is projected onto a world coordinate system. The world coordinate system is a reference coordinate system of a two-dimensional (XY) coordinate system. The relative placement calculation means 3 defines, on the world coordinate system, the relative placement relationship between the movement trajectory LC of the vehicle 10 including the present position, and the sample group S, which is the surface shape information of the parked vehicles 20.

As described above, the outline shape is recognized on the basis of the sample group S. FIG. 12 is a descriptive diagram showing a method for identifying a parked vehicle 20 from the recognized outline shape of the front end or rear end of the parked vehicle 20. As shown in FIG. 12, the shapes of the parked vehicles 20 are estimated on the basis of the outline shape E. For example, as shown in the drawings, in cases where the outline shape E is recognized as the shape of the front ends or rear ends of the parked vehicles, the shapes of the parked vehicles 20 are estimated as described below. The line perpendicular to the tangent line in the center part of the outline shape E (normal line) is taken as the center line CL, and the direction of the center line CL is assumed to be the direction D of the parked vehicle 20. In other words, the vehicle axis, which is the center of the longitudinal direction of the parked vehicle 20, is taken as the center line CL in this case. The overall width of the parked vehicle 20 is determined from the detected outline shape E, and the overall length of the parked vehicle 20 is defined as being of a prescribed overall length FL in the longitudinal direction. The overall length does not need to be accurately detected, and may be set to a value of approximately four to five meters, which is the typical overall length for a vehicle. The distance sensor 1 can accurately detect the surface shape of the front end parts or rear end parts of the opposing parked vehicle 20. In other words, the overall width of the parked vehicle 20 can be accurately detected. However it is difficult to accurately detect the overall length, which is the depth direction. A standardized vehicle length is therefore used.

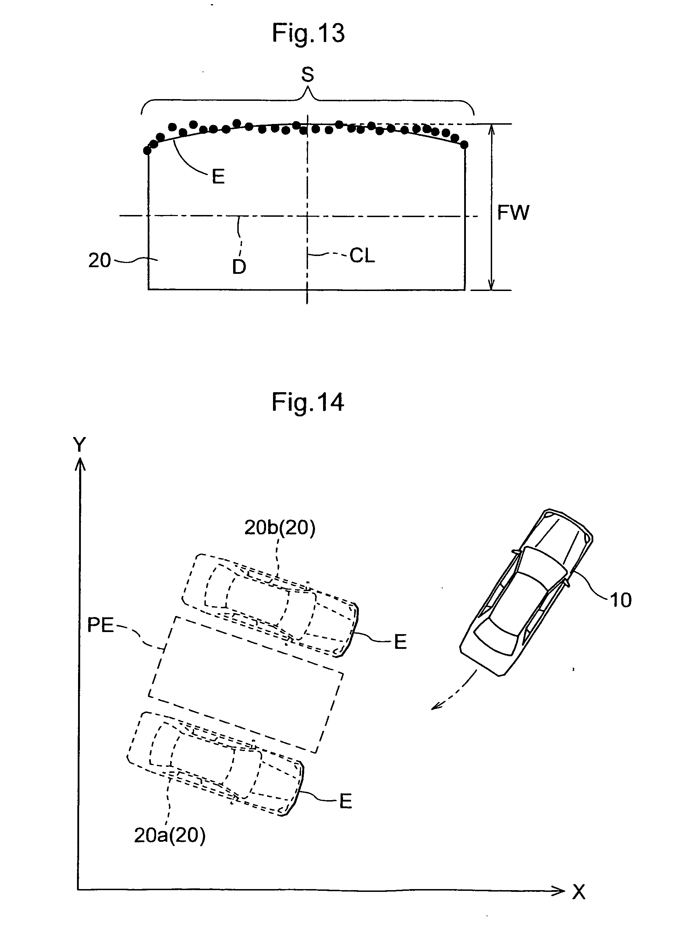

As shown in FIG. 13, in a case in which the outline shape E is recognized as the side surface of a parked vehicle 20, the shape of the parked vehicle is estimated as described below. The line perpendicular to the tangent line in the center part of the outline shape E (normal line) is taken as the center line CL, and the direction D perpendicular to the center line CL is taken to be the direction of the parked vehicle 20. The overall length of the parked vehicle 20 is determined from the detected outline shape E. The overall width of the parked vehicle 20 is defined as being a prescribed overall width value FW. As described above, the overall width does not need to be accurately detected, and can be set to a value of approximately 1.6 to 1.8 meters, which is a general overall width for a vehicle.

[Parked vehicle space detecting step]

The relative placement relationship of the vehicle 10 and the parked vehicle 20 on the world coordinate system is thus learned, and the shape of the parked vehicle 20 can be estimated. Therefore, as shown in FIG. 14, a parking space PE for the vehicle 10 is detected in the world coordinate system. The shape, position, and direction of the vehicle 10 that is the vehicle being driven; as well as the outline shape E of the parked vehicles 20a and 20b can be accurately correlated in the world coordinate system, as shown by the solid lines in FIG. 14. However, the outline shapes of the parked vehicles 20a and 20b are estimated as shown by the dashed line in FIG. 14, as described on the basis of FIG. 12 and FIG. 13. The parking space detection means 4 detects the space between the parked vehicles 20a and 20b as the parking space PE when the space is confirmed on the world coordinate system to be sufficient to park the vehicle 10.

[Parking reference setting step]

When the parking space PE is detected, the parking reference setting means 5 sets a parking reference P for satisfactorily parking the vehicle 10 within the range of the parking space PE.

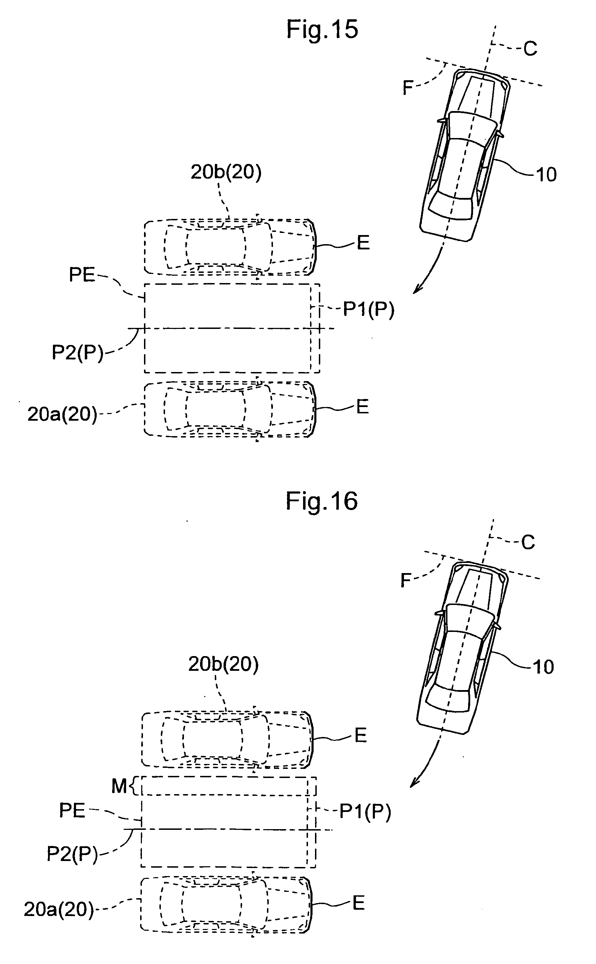

FIG. 15 shows an example of the parking reference P in the case of so called garage parking, as shown in FIG. 2. A first reference line P1 is provided to an entrance side of the parking space PE, and is substantially parallel to an edge on the entrance side of the parking space PE. A second reference line P2 which is perpendicular to the first reference line P1 is provided to a prescribed position. In the example shown in FIG. 15, the second reference line P2 is set so as to pass through the center of the parking space PE.

The driver of the vehicle 10 reverses the vehicle so that the second reference line P2 is aligned with a vehicle axis C, which is the center line along the longitudinal direction of the vehicle 10. The driver completes parking of the vehicle 10 by aligning the first reference line P1 with front end part F along the longitudinal direction of the vehicle 10. When this action has been accomplished, the driver can satisfactorily park the vehicle 10 in the parking space PE. In other words, it is possible to obtain a parking assistance device that allows the driver to park the vehicle 10 satisfactorily by carrying out a driving operation according to the parking references P.

It shall be apparent that the parking references P are not limited to the examples described above. The position of the first reference line may be appropriately varied in consideration of the overall length of the vehicle 10. For a vehicle 10 that has a smaller overall length, the position should be further from the entrance of the parking space PE. On the other hand, for a vehicle 10 that has a larger overall length, the position of the first parking reference line should be nearer the entrance side of the parking space PE. Since an adequate arrangement will be obtained as long as the vehicle 10 does not protrude from the parking space PE, [the position] may be aligned with the edge of the entrance side of the rectangular parking space PE.

The position of the second parking reference line P2 may also be varied appropriately. For example, in cases where the side generating an inner wheel difference is to be made larger in accordance with the direction in which the vehicle is taken out, the second parking reference line P2 may be moved away from the center of the parking space PE. In other words, extra space M between the parked vehicles 20 and the vehicle 10, which is necessary when the vehicle is to be taken out, is provided within the parking space PE, as shown in FIG. 16. The second parking reference line P2 may also be provided to the center of the parking space PE, with the extra space M removed. Extra space M may be provided in cases where it is desirable to expand the space on the driver side, or in cases where it is desirable to expand the space on the passenger side, regardless of whether or not extra space is necessary when taking out the vehicle. This is also effective in cases where it is desirable to ensure sufficient space for children or elderly passengers to enter and exit the vehicle. In the example shown in FIG. 16, the extra space M may be provided to either the front or rear direction of the parking space PE, and the first reference line P1 may be changed. This is useful in cases where, e.g., it is desirable to ensure sufficient space to load or unload a wheelchair, a stroller, or other piece of equipment from the trunk or cargo bay of the vehicle 10.

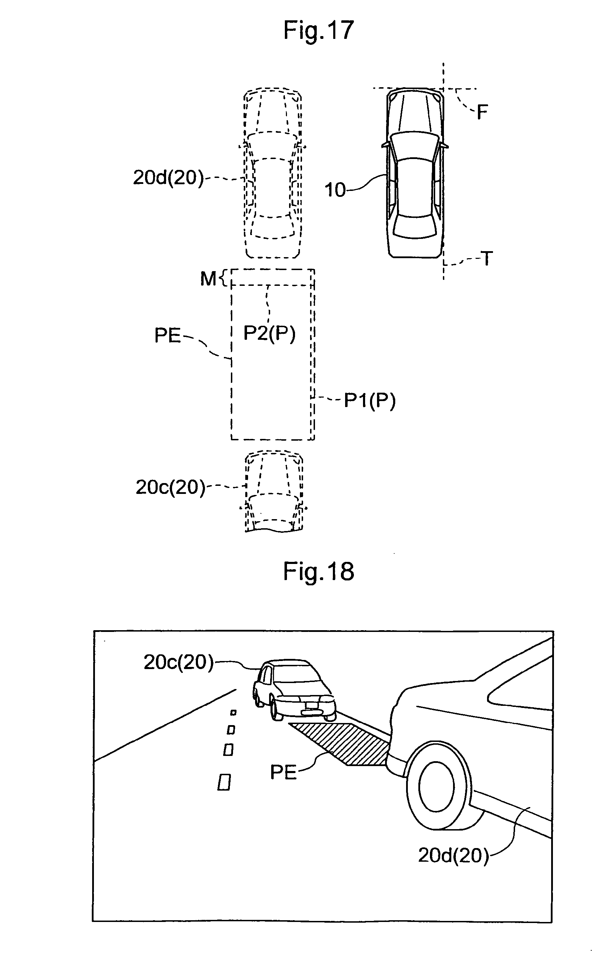

FIG. 17 is a diagram showing an example of the parking references P that are set in cases of so-called parallel parking as shown in FIG. 4. The first reference line P1 is provided to the entrance side of the parking space PE substantially parallel to the edge on the entrance side of the parking space PE. The second reference line P2 which is perpendicular to the first reference line P1 is provided to a prescribed position. In the example shown in FIG. 17, extra space M is provided between the parked vehicles 20 and the vehicle 10 to allow for cases when the vehicle 10 is taken out of the parking space PE. The second parking reference line P2 is provided to the parking space PE with the extra space M having been removed. In the example shown in FIG. 17, the second parking reference line P2 is provided so as to be aligned with one edge of the parking space PE, with the extra space M having been removed.

The driver reverses the vehicle so that the first reference line P1 is aligned with the side end part T in the longitudinal direction of the vehicle 10. The driver parks the vehicle 10 by aligning the second parking reference line P2 with the front end part F of the longitudinal direction of the vehicle 10. The driver can thereby satisfactorily park the vehicle 10 within the parking space PE. In other words, a parking assistance device can be obtained in which the driver can satisfactorily park the vehicle 10 by carrying out a driving operation according to the parking references P. A third reference line that is aligned with the vehicle axis C of the vehicle 10 may be provided after the first reference line P1 has been provided. In this case, the driver can reverse the vehicle so that the third reference line is aligned with the vehicle axis C, which is the center line along the longitudinal direction of the vehicle 10, in the same manner as in the garage parking described above. Guide lines can be shown on the monitor device 7a of the vehicle 10 on the basis of the reference line P. Displaying a guide line corresponding to the vehicle access C of the vehicle 10 is very convenient for the driver, regardless of the parking method. In the present example, the third reference line is merely obtained by geometrically moving the first reference line P1. Therefore, the present embodiment, in which the third reference line is used, belongs within the technical field of the present invention.

[Notifying the driver]

As described above, guide lines based on the parking references P can be shown on the monitor device 7a. In another example, shown below, the driver is notified of the driving assistance results. FIG. 18 shows an example in which the detected parking space PE is displayed on the monitor device 7a, and the driver is notified in a case where parallel parking is performed in the manner shown in FIG. 4. In this example, the detected parking space PE is displayed superimposed over an image of the periphery of the vehicle captured by a rear camera (not shown) mounted on the vehicle 10. The driver can view the monitor device 7a, and confirm that space is available for the vehicle to be parked.

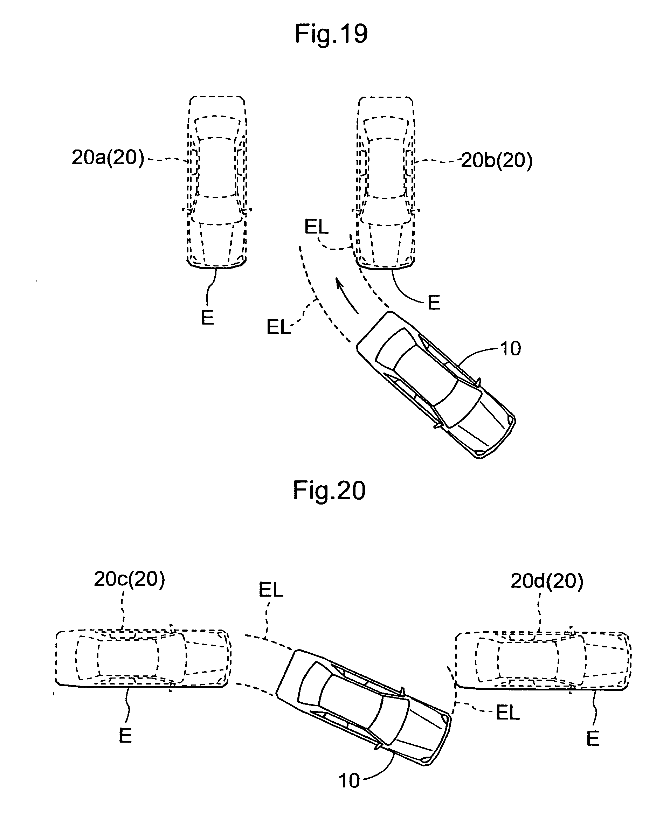

FIGS. 19 and 20 show an example in which the expected movement trajectory EL of the vehicle 10 being driven by the driver is calculated, and the driver is notified as to whether interference will occur between the vehicle 10 and the parked vehicles 20. The expected movement trajectory EL of the vehicle 10 is calculated by the parking assistance ECU 9 on the basis of the detection results obtained from the wheel speed sensor 6a, steering angle sensor 6b, or other such movement status detection means 6. FIG. 19 is an example of a case in which garage parking is performed as shown in FIG. 2. FIG. 20 is an example of a case in which parallel parking is performed as shown in FIG. 4.

As described above, the outline shape E of the portion of the end parts of the parked vehicles 20 near the vehicle 10 are substantially accurately detected. Therefore, the parking assistance ECU 9 can accurately determine the possibility of interference occurring between the vehicle 10 and the parked vehicles 20. When the determining results indicate that there is a possibility that interference will occur between the vehicle 10 and the parked vehicles 20, the driver is accordingly notified via the monitor device 7a or the buzzer 7b. The output may also be transmitted to a steering control part 8a, whereupon the steering angle may be varied, or may be transmitted to a brake control part 8b, whereupon the vehicle may be slowed or stopped.

As described above, the present invention can provide a parking assistance device for accurately detecting obstacles in the periphery of a parking space; detecting a parking space in which a vehicle can be parked without coming into contact with the obstacles; and satisfactorily assisting a driving operation.

INDUSTRIAL APPLICABILITY

The present invention can be used in, e.g., a vehicle driving assistance device, a parking assistance device, and an onboard navigation system.

BRIEF DESCRIPTION OF THE DRAWINGS

FIG. 1 is a block diagram schematically showing a configuration of a parking assistance device according to the present invention;
FIG. 2 is a descriptive diagram showing an example in which a vehicle equipped with the parking assistance device of the present invention detects surface shape information of parked vehicles;
FIG. 3 is a descriptive diagram showing an example of the surface shape information of the parked vehicles detected in FIG. 2;
FIG. 4 is a descriptive diagram showing another example in which a vehicle equipped with the parking assistance device of the present invention detects surface shape information of parked vehicles;
FIG. 5 is a descriptive diagram showing an example of the surface shape information of the parked vehicles detected in FIG. 4;
FIG. 6 is a point diagram in which results from measuring the surface shape information are mapped on a two-dimensional Cartesian coordinate system;
FIG. 7 is an descriptive diagram for calculating the degree of agreement between the sample group and the first shape model determined using the samples arbitrarily extracted from the sample group shown in the point diagram of FIG. 6;
FIG. 8 is an descriptive diagram for calculating the degree of agreement between the sample group and the second shape model determined using the samples arbitrarily extracted from the sample group shown in the point diagram of FIG. 6;
FIG. 9 is a flowchart for describing an example of a method for recognizing the outline shape from the sample group shown in the point diagram of FIG. 6;
FIG. 10 is a flowchart for describing another example of a method for recognizing the outline shape from the sample group shown in the point diagram of FIG. 6;
FIG. 11 is a descriptive diagram showing an example in which surface shape information of the parked vehicles detected in FIG. 2 is projected onto a world coordinate system;
FIG. 12 is a descriptive diagram showing a method for identifying a parked vehicle from the recognized outline shape of the front end or rear end of the parked vehicles;
FIG. 13 is a descriptive diagram showing a method for identifying a parked vehicle from the recognized outline shape of the side surfaces of the parked vehicles;
FIG. 14 is a descriptive diagram showing an example in which a parking space is detected in the world coordinate system;
FIG. 15 is a descriptive diagram showing an example in which a parking reference is detected in the parking space;
FIG. 16 is a descriptive diagram showing a modification of the example shown in FIG. 15;
FIG. 17 is a descriptive diagram showing another example in which a parking reference is set in parking space;
FIG. 18 is a descriptive diagram showing an example in which the parking space shown in FIG. 16 is displayed on a monitor device;
FIG. 19 is a descriptive diagram showing an example of a case in which interference occurs between a parked vehicle and the predicted movement trajectory of the vehicle being driven; and
FIG. 20 is a descriptive diagram showing another example of a case in which interference occurs between a parked vehicle and the predicted movement trajectory of the vehicle being driven.

[ KEY]

1: distance sensor (surface shape detection means)
2: shape recognition means 2

(2a: sample storage part; 2b: sample extraction part; 2c: shape model setting part; 2d: agreement calculation part; 2e: determining part)

3: relative placement calculation means
4: parking space detection means
5: parking reference setting means
6: movement status detection means
9: parking assistance ECU
10: vehicle
20: parked vehicle (stationary object)
PE: parking space
P: parking references (P1: first parking reference line; P2: second parking reference line)
s: sample (surface shape information)
S: sample group S (surface shape information)

**Claims**

1. A parking assistance device for detecting a stationary object present in the periphery of a vehicle, and assisting in parking the vehicle; wherein the parking assistance device comprises:

   surface shape detection means for detecting surface shape information of the stationary object;
   shape recognition means for recognizing the outline shape of the stationary object on the basis of the surface shape information;
   movement status detection means for detecting the movement status of the vehicle;
   relative placement calculating means for calculating a relative placement relationship of the vehicle and the stationary object on the basis of the surface shape information, the outline shape, and the movement status; and
   parking space detection means for detecting, on the basis of the relative placement relationship, a parking space in which the vehicle can park.

2. The parking assistance device according to claim 1, wherein
   the surface shape detection means detects the surface shape information in conjunction with the movement of the vehicle; and
   the shape recognition means recognizes the outline shape on the basis of the surface shape information and the movement state.

3. The parking assistance device according to claim 1, further comprising:

   parking reference setting means for setting a parking reference for ascribing a rectangular shape to the parking space, and for parking the vehicle within the range of the parking space; wherein
   the parking reference setting means sets, as the parking reference, a first reference line, which is parallel to an edge on an entrance side where the vehicle begins to enter the parking space, and which is provided to the entrance side of the parking space; and a second reference line, which is perpendicular to the first reference line, and which is provided to a prescribed position; and
   the first reference line and the second reference line are set so that parking is completed when a front or rear end part along the longitudinal direction of the vehicle is aligned with the first reference line; and the vehicle axis, which is center line along the longitudinal direction of the vehicle, is aligned with the second reference line.

4. The parking assistance device according to claim 1, further comprising:

   parking reference setting means for setting a parking reference for ascribing a rectangular shape to the parking space, and for parking the vehicle within the range of the parking space; wherein
   the parking reference setting means sets, as the parking reference, a first reference line, which is parallel to an edge on an entrance side where the vehicle begins to enter the parking space, and which is provided to the entrance side of the parking space; and a second reference line, which is perpendicular to the first reference line, and which is provided to a prescribed position; and
   the first reference line and the second reference line are set so that parking is completed when the left or right end part along the transverse direction of the vehicle is aligned with the first reference line; and the front or rear end part along the longitudinal direction of the vehicle is aligned with the second reference line.

5. The parking assistance device according to claim 4, wherein
   the second reference line is defined so as to pass through the center of the parking space.

6. The parking assistance device according to claim 3, wherein
   extra space between the stationary object and the vehicle, which is necessary when the vehicle is moved in and out of the parking space, is provided within the parking space; and the second reference line is set with respect to the parking space without the extra space being included.

7. The parking assistance device according to claim 6, wherein
   the extra space can be changed according to a desired width to be maintained on the driver side or the passenger side during parking.

8. The parking assistance device according to any of claims 1 to 5, wherein the shape recognition means has:

   a sample extraction part for extracting an arbitrary sample from among a sample group constituting the surface shape information;
   a shape model setting part for defining a shape model on the basis of the extracted sample;
   an agreement calculation part for calculating the degree of agreement between the shape model with respect to the sample group; and
   a determining part for determining whether the shape model matches the sample group on the basis of the calculation results.

9. The parking assistance device according to claim 1, wherein the stationary object is a parked vehicle.

10. The parking assistance device according to claim 2, wherein
   the stationary object is a parked vehicle; and the surface shape detection means detects the bumpers of the parked vehicles or the side surfaces of the parked vehicles as the surface shape information.

Fig.1

DISTANCE SENSOR — 1

MOVEMENT STATUS DETECTION MEANS — 6
WHEEL SPEED SENSOR — 6a
FR FL RR RL
STEERING ANGLE SENSOR — 6b

PARKING ASSISTANCE ECU — 9

SHAPE RECOGNITION MEANS — 2
SAMPLE STORAGE PART — 2a
SAMPLE EXTRACTION PART — 2b
SHAPE MODEL SETTING PART — 2c
AGREEMENT CALCULATION PART — 2d
DETERMINING PART — 2e

RELATIVE PLACEMENT CALCULATION MEANS — 3
PARKING SPACE DETECTION MEANS — 4
PARKING REFERENCE SETTING MEANS — 5

MONITOR DEVICE — 7a(7)
BUZZER — 7b(7)
STEERING CONTROL PART — 8a(8)
BRAKE CONTROL PART — 8b(8)

## Fig.2

## Fig.3

## Fig.4

## Fig.5

## Fig.6

## Fig.7

## Fig.8

# Fig.9

START

#1
RANDOMLY EXTRACT SAMPLES
FROM THE SAMPLE GROUP

#2
DETERMINE SHAPE MODEL
FROM THE EXTRACTED SAMPLES

#3
CALCULATE THE DEGREE OF
AGREEMENT BETWEEN THE SHAPE
MODEL AND THE SAMPLE GROUP

#4
IS THE DEGREE OF AGREEMENT GREATER
THAN THE THRESHOLD VALUE
?

No

Yes

#5
SET THE DETERMINED SHAPE MODEL
AS THE RECOGNITION RESULTS

END

# Fig.10

```
                    ( START )
                        │
     #0                 ▼
        ┌──────────────────────────────────┐
        │   SET THE NUMBER OF              │◄──────────────┐
        │   REPETITIONS TO ZERO           │               │
        └──────────────────────────────────┘               │
     #1                 ▼                                   │
        ┌──────────────────────────────────┐               │
        │  RANDOMLY EXTRACT SAMPLES       │               │
        │  FROM THE SAMPLE GROUP          │               │
        └──────────────────────────────────┘               │
     #2                 ▼                                   │
        ┌──────────────────────────────────┐               │
        │  DETERMINE THE SHAPE MODEL      │               │
        │  FROM THE EXTRACTED SAMPLES     │               │
        └──────────────────────────────────┘               │
     #3                 ▼                                   │
        ┌──────────────────────────────────┐               │
        │  CALCULATE THE DEGREE OF        │               │
        │  AGREEMENT BETWEEN THE SHAPE    │               │
        │  MODEL AND THE SAMPLE GROUP     │               │
        └──────────────────────────────────┘               │
```

#4 IS THE DEGREE OF AGREEMENT GREATER THAN THE THRESHOLD VALUE?

Yes

#41 RECORD THE SHAPE MODEL AND THE DEGREE OF AGREEMENT

No

#44 IS THE DEGREE OF AGREEMENT GREATER THAN THE SECOND THRESHOLD VALUE?

No

#42 SET THE NUMBER OF REPETITIONS TO A PRESCRIBED NUMBER OF REPETITIONS +1

Yes

#43 IS THE NUMBER OF REPETITIONS EQUAL TO A PRESCRIBED NUMBER OF REPETITIONS?

No

#5 SET THE DETERMINED SHAPE MODEL AS THE RECOGNITION RESULTS

Yes

#51 SET THE SHAPE MODEL HAVING THE HIGHEST DEGREE OF AGREEMENT AS THE RECOGNITION RESULTS

( END )

## Fig.11

## Fig.12

## Fig.13

## Fig.14

## Fig.15

## Fig.16

## Fig.17

20d(20)

10

F

T

M{

PE

P2(P)

P1(P)

20c(20)

## Fig.18

20c(20)

PE

20d(20)

## Fig.19

## Fig.20

**INTERNATIONAL SEARCH REPORT**

| International application No. |
| --- |
| PCT/JP2006/314731 |

A. CLASSIFICATION OF SUBJECT MATTER
*B60R21/00(2006.01)i*

According to International Patent Classification (IPC) or to both national classification and IPC

B. FIELDS SEARCHED

Minimum documentation searched (classification system followed by classification symbols)
B60R21/00

Documentation searched other than minimum documentation to the extent that such documents are included in the fields searched

| | | | |
| --- | --- | --- | --- |
| Jitsuyo Shinan Koho | 1922-1996 | Jitsuyo Shinan Toroku Koho | 1996-2006 |
| Kokai Jitsuyo Shinan Koho | 1971-2006 | Toroku Jitsuyo Shinan Koho | 1994-2006 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| X | JP 2003-063337 A (Nissan Motor Co., Ltd.), 05 March, 2003 (05.03.03), Par. Nos. [0021] to [0082] (Family: none) | 1-10 |
| X | JP 2004-62380 A (Nissan Motor Co., Ltd.), 26 February, 2004 (26.02.04), Par. Nos. [0033] to [0047] (Family: none) | 1,2,8,9,10 |
| X | JP 2004-108944 A (Nissan Motor Co., Ltd.), 08 April, 2004 (08.04.04), Par. Nos. [0007] to [0044] (Family: none) | 1,2,8,9,10 |

☒ Further documents are listed in the continuation of Box C.　　☐ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 01 September, 2006 (01.09.06) | 12 September, 2006 (12.09.06) |

| Name and mailing address of the ISA/ | Authorized officer |
| --- | --- |
| Japanese Patent Office | |
| Facsimile No. | Telephone No. |

Form PCT/ISA/210 (second sheet) (April 2005)

<table>
<tr><td colspan="2">**INTERNATIONAL SEARCH REPORT**</td><td>International application No.<br>PCT/JP2006/314731</td></tr>
</table>

C (Continuation).　DOCUMENTS CONSIDERED TO BE RELEVANT

| Category* | Citation of document, with indication, where appropriate, of the relevant passages | Relevant to claim No. |
|---|---|---|
| X | JP 2004-74930 A  (Mitsubishi Motors Corp.),<br>11 March, 2004 (11.03.04),<br>Par. Nos. [0012] to [0034]<br>(Family: none) | 1,2,9,10 |
| X | JP 2005-193698 A  (Mitsubishi Motors Corp.),<br>21 July, 2005 (21.07.05),<br>Par. Nos. [0013] to [0056]<br>(Family: none) | 1,2,9,10 |
| A | JP 11-339194 A  (Aisin Seiki Co., Ltd.),<br>10 December, 1999 (10.12.99),<br>Fig. 17<br>(Family: none) | 3-7 |
| A | JP 2005-132180 A  (Toyota Industries Corp.),<br>26 May, 2005 (26.05.05),<br>Par. Nos. [0019] to [0034]<br>(Family: none) | 4,6,7 |

Form PCT/ISA/210 (continuation of second sheet) (April 2005)

**EP 1 908 641 A1**

**REFERENCES CITED IN THE DESCRIPTION**

**Patent documents cited in the description**

- JP 2003063335 A
- JP 2001334897 A
- JP 2004034946 A